# EUROPEAN PATENT APPLICATION

(11) **EP 4 006 584 A1**
(43) Date of publication of application: **01.06.2022**
(21) Application number: 20847566.5
(22) Date of filing: 30.06.2020
(51) Int. Cl.: G01S 15/04, G01S 15/00, G01N 29/04

(54) **SYSTEM AND METHOD FOR THE DETECTION OF OBJECTS CONCEALED BENEATH THE CLOTHING OF A PERSON**

(30) Priority: 30.07.2019 ES 201930704
(71) Applicant: San Jorge Tecnologicas, S.L., 28341 Valdemoro (ES); Universidad de Alcalá, 28801 Alcala de Henares (Madrid) (ES)
(72) Inventor: CORELLA ROMERO, Javier, 28341 Madrid (ES); PÉREZ DÍAZ, José Luis, 28801 Alcalá de Henares (ES)
(74) Representative: Lorente Berges, Ana
(86) International application number: PCT/ES2020/070420
(87) International publication number: WO 2021/019112

(57) **Abstract**

The invention discloses a system for the detection of objects concealed beneath the clothing of a person comprising: at least one acoustic wave emitter (1) directed toward the person (5), where the waves are non-stationary low frequency near-field acoustic waves; and at least one acoustic wave detector (3) oriented toward the person (5) in order to receive any acoustic waves reemitted by the person (5) in response to interaction with the non-stationary low frequency near-field acoustic waves, in such a wat that analysis of the reemitted acoustic waves detected by at least one detector (3) enables the determination of whether the person (5) is carrying any object concealed beneath their clothing. The invention also discloses a method for the performance of the detection of objects implemented by means of the system described above.

## Description

### OBJECTIVE OF THE INVENTION

The present invention belongs in general to the field of security, and more specifically to the detection of illegal or illicit goods carried by a person.

A first aspect of the present invention is a system designed for detecting objects concealed under the clothes of a person with a high reliability and without the need of subjecting the person to potentially harming radiations.

A second aspect of the present invention is a method to detect hidden objects suitable for execution by the system disclosed.

### BACKGROUND OF THE INVENTION

Currently, to prevent the risk of terrorist attacks in places where numerous people access, for instance, airports, sports events, musicals, religious and festive events, etc., as well as to limit the illegal traffic of substances or goods across borders and customs, such as drugs, currency, tobacco, etc., it is necessary to control the items that people carry. This control is performed by using devices designed to detect objects that are potentially hazardous, forbidden or restricted for, if needed, banning entrance to the persons carrying them.

Since, in many occasions, it is necessary to control a large number of people in a very short time, especially in the transport sector, the detection process must be fast. Additionally, it is also necessary to be respectful with travellers. This implies limiting as much as possible, the radiations
they are exposed to as well as respecting their intimacy avoiding the generation of intimate images.

Presently, the main technique used for the detection of concealed items is the conventional manual pad down. This technique is highly invasive, slow, unpleasant, poorly respectful with intimacy of inspected persons and dangerous for the inspector (for instance, in the case of detection of explosive belts). It additionally presents an intensive need of personnel of both sexes to avoid the need of performing pad downs to persons of the other sex. Another drawback of this technique is its low effectiveness on body parts that are especially sensitive or critical, such as genitals.

Other technique widely used are the millimeter wave scanners that are based on the emission of electromagnetic waves with wavelengths located in the electromagnetic spectrum region corresponding to microwaves. This kind of devices are described, for instance, at the Appleby, R (15 February 2004). "Passive millimetre-wave imaging and how it differs from terahertz imaging". Philosophical Transactions o of the Royal Society. A: Mathematical, Physical and Engineering Sciences. 362 (1815): 379-393.].

However, this technology presents serious privacy problems because it shows an image of the full body of the scanned person. Moreover, there is still discussion about the potential adverse effects that the use of this technology may have on health.

Another technique widely spread is based on the emission of an X-ray beam that reaches the surface of the body of the scanned person. Rays are dispersed or reflected and they reach a detector. Thus, by computer processing, an image of the person is formed, making possible to detect concealed items under the clothes. This kind of technique is described, for instance, in the patent document US 5181234 by Steven W. Smith entitled "X-ray Backscatter Detection System"

This technology presents essentially the same drawbacks of the previous one regarding privacy. With respect to consequences on health, drawbacks are higher for this last technique as it uses ionizing radiation. Despite it being used with very low doses, the effects on health of these radiations are not clear yet.

It is also known, although in a completely different context, the use of acoustic ultrasonic waves for diagnosis and formation of images in the field of medicine (see, for instance, the document of patent US3688564) and for inspecting defects and irregularities (see, for example, the documents of patent CA1173146 or US20060201253). They are high frequency ultrasonic waves in far-field and stationary regime that reflect on the object to analyse and whose reflect is received and analysed to obtain information about its shape. However, these ultrasonic high-frequency waves are easily absorbed and reflected in material discontinuities and interfaces (with a jump of acoustic impedance). For this reason, a light cloth is enough to reflect or completely absorb the wave. As they do not penetrate through the clothes, it is evident that these waves are not useful to detect anything beneath them.

Moreover, even considering the emission of low frequency acoustic waves able to travel through clothes, they would only be able to detect objects sized at least the order of magnitude of their wavelength, and would not be operative as these wavelengths would be of the order of magnitude of one meter.

In conclusion, there is still a need in this field for improved devices for detection of concealed items under the clothes solving the abovementioned drawbacks.

### DESCRIPTION OF THE INVENTION

The inventors of the present invention discovered that it is possible to detect objects hidden beneath the clothes by the emission of acoustic low frequency waves in near field and non-stationary regime.

Indeed, when a non-stationary (transient) acoustic wave excites a mechanical element essentially composed by masses, stiffness and dumpers (hysteresis or viscosities) that forms its acoustic-mechanical impedance, the response of such mechanical element depends on the values of those parameters. That is, in transient regime, the differences in responses are amplified according to their vibration and oscillation modes. It occurs even if the wavelength of the acoustic wave has a significantly bigger size than the biggest of the excited elements.

Thus, when a non-stationary acoustic wave interacts with a human body that has attached in any way an object of determined mass and stiffness, an interaction occurs exciting the mechanical elements (Human body and object), and they respond in a different way if the stiffness and/or masses are different. The inventors of the present invention discovered that, analysing the acoustic waves reemitted after detecting them by using one or a plurality of microphones distributed close to the body of the person, it is possible to determine if the person has any foreign object attached to their body. More precisely, this is achieved because the acoustic waves received from a person carrying an object attached to the body present detectable differences from the acoustic waves received if the person does not carry anything attached to their body.

In this document, the term "low frequency acoustic wave" refers to a mechanical wave transmitted in the air whose frequency is lower to approximately 200 Hz either audible or not. A particular example of low frequency acoustic wave is infrasound, whose frequency is lower than the human hearing threshold that is approximately 20Hz.

In this document, the term "non stationary regime" referred to an acoustic wave, refers to a mechanical wave (sound or infrasound) whose characteristics of amplitude, and frequency vary in a time comparable with its characteristic period (or the inverse of their main frequency).In this way, a frequency is held only for a few cycles at the most.

In this document, the term "near-field" referred to an acoustic wave, refers to the area of the sound field where sound pressure and velocity of particles are not in phase. This region is limited to a distance, measured from the sound source, of the order of magnitude of the wavelength of the emitted sound d. (See, for instance, page 27 of "Fundamentals of acoustics" of Professor Colin H. Hansen https://www.who.int/occupational_health/publications/noise1.pdf that cites in turn standard ISO 12001.

A first aspect of the present invention covers a system for the detection of concealed items under the clothes of a person that comprises essentially an acoustic emitter and an acoustic detector. Each of these elements is described in more detail below:

### a) Emitter

At least, one emitter of acoustic waves that faces to the person, and where the waves are low frequency acoustic waves in non-stationary and near field regime.

Although in a basic system configuration, a single emitter is used, it is possible to have several emitters facing to the person from different directions. This option, as it excites better different parts of the body of the person, it increases the number of sound waves received as a response, and thus, it enables an increase in the precision of the system.

The emitter of acoustic waves can be a speaker or a conduit that connects the speaker with the enclosure, it must be placed at a distance from the person to be inspected to ensure a determined minimum intensity. This distance can be, for instance, between 50 and 700mm.

Regarding frequency of the emitted sound waves, it can be any, provided it excites the skin of the inspected person in a way that, in response, it reemits acoustic waves that could be received by the detector that is described below. For instance, in general is sufficient if the frequency is lower than a few hundred Hertz.

However, the inventors discovered that the invention system is particularly effective when the frequency of acoustic waves emitted meets with the skin resonance of the inspected person. The resonance frequency of the skin of a person could be between approximately 2 and 200 Hz. Hence, according to a particularly preferred embodiment of the invention, the low frequency acoustic waves in a non-stationary regime have frequencies between 2 and 200 Hz.

### b) Detector

It is, at least, one detector of acoustic waves also facing to the person to receive some acoustic waves reemitted by the person in response to the interaction with the low frequency waves in non-stationary and near field regime.

Although in a basic system configuration of the system of the invention, a single detector is used, it is possible to have several detectors facing to the person from different directions with the purpose of receiving the waves reemitted by different parts of the skin of the human body. Indeed, different parts of the skin of the human body resonate at different resonance frequencies emitting acoustic waves in different directions. Placing dedicated detectors for several of these reemitted acoustic waves, increases the amount of information obtained as response and therefore, increases the precision of the system.

Additionally, the detector of acoustic waves, that could be a microphone of adequate characteristics, should be placed at a distance from the person to which the reemitted acoustic waves reach in the clearest possible way. For instance, according to a particularly preferred embodiment of the invention, at least, an acoustic wave detector is placed at a distance between 0.1 and 2 m from the person

In this way, after the emission of acoustic waves towards the person and the detection of the corresponding acoustic waves reemitted by the person, an analysis of such reemitted acoustic waves makes it possible to determine if the person is concealing an item beneath the clothes.

Generally, the reemitted sound intensity is lower if there is an object or a material on the skin than if may resonate freely conforming surface waves. The clothing do not usually affect the formation of these waves. Therefore, if the received acoustic waves are compared with some reference acoustic waves corresponding to a person that does not carry any attached object, it is possible to detect differences that show the presence or absence of such object. To do this comparison, it is possible to use different mathematical parameters such as the Fourier Transform, phase shift, phase shift in the resonance peaks, signal delay or just amplitude.

In principle, the analysis step can be done using any adequate means for processing, as for example, a microcontroller, a microprocessor, a computer, an ASIC, a DSP, a FPGA, or others. Also, the mean for processing could be placed in a remote location to which the signals are sent to by any known mean, as for instance, Bluetooth, Wi-Fi, internet, telephone network (GSM, UMTS, or others), etc.

In any case, in a particularly preferred embodiment of the invention, the system of the invention comprises as well, a mean of processing connected to the detector for receiving and analysing the reemitted waves detected by the detector and thus determine if the person is carrying any item beneath the clothes.

A second aspect of the present invention is devoted to a method for the detection of concealed items beneath the clothes of a person that comprises essentially the following steps:
1) Emit, by at least, one emitter facing to the person, low frequency acoustic waves in a non-stationary regime and near field.
   In principle, as it was described previously in this document, the frequency of the emitted acoustic waves will be between 2 Hz and 200 Hz. However, as the frequencies present slight variations, the inventors discovered that the precision of the inspection is improved if a sequence or a progressive sweep of frequencies is used. This sweep may be comprised, for instance between the 2 and 200 Hz, enabling in this way the detection of resonances independently of the body shape of the person and the detection of items with different masses, densities or mechanical constitutions.
   In a more preferred embodiment of the invention, the interrogation sequence, uses a sweep of 460 cycles of frequencies between 30 Hz and 110 Hz in approximately 6 seconds so that each cycle has a frequency of 0.21Hz higher than the previous. This permits that the different parts of the body (specially the skin at different areas) respond in a different manner to the different frequencies in the sweep, doing it so, in a certain moment of the sequence and in different ways if an object is attached or not. Above and below these frequencies, no relevant responses were found.
   On the other hand, according to the experience of the inventors, the first reaction of the speakers, usually vary unpredictably and depends on its initial status. That is why in another preferable embodiment of the present invention, and in order to prevent the uncertainty at the start, a first tone with a fixed frequency is emitted with synchronization purposes. This fixed tone is sustained during one or a few cycles, preferably two cycles, before emitting the sequence of the frequency sweep. In this way, it is possible to synchronize unequivocally, the sound signals emitted, improving the precision of the system.
2) Receive, by using at least one receptor facing to the person, some acoustic waves reemitted by the person in response to the low frequency sound waves in a non-stationary regime and near field.
   In effect, as it was described above in this document, the receptor receives the acoustic sound waves reemitted by the different parts of the body of the person excited by the acoustic waves emitted by the emitter.
3) Analise, by any means for processing, the acoustic waves reemitted to determine if the person is carrying any object concealed beneath the clothes.

The means for processing receives from the receptor the acoustic waves reemitted by the body of the person. As it was mentioned above, the communication can be wireless and the means for processing can be placed in a remote location in relation with the rest of the system, although preferably, the means for processing is connected to the receptor.

As it was mentioned above in this document, an object attached to the body has a particular mass and presents a stiffness in its joint with the human body. This causes new vibration modes to appear and, additionally, modifies the response of the body against the sound excitation when it is interposed in the interaction of the sound wave with the skin of the body of the person. Thus, there appear differences between the reemitted signals from a person without any attached object and the signals reemitted by a person with an attached object.

Also, the room where the measurements take place presents acoustic modes that depend on its geometry. On the other hand, as the sound propagation speed in the air depends on the temperature and even humidity, those frequencies vary with weather conditions. In view of what, a measure taken in absence of person can be used as reference with the purpose of avoiding all this variability and improving the sensitivity of the device.

Hence, in a particularly preferred embodiment, the step of analysing the reemitted acoustic waves to determine if the person is carrying any item hidden under the clothes comprises to compare the reemitted acoustic waves with a reference signal corresponding to the acoustic waves reemitted by a person without any concealed objects and/or a reference signal received in absence of person. This comparison can be done, for instance, using one or several of the following parameters: Fourier Transform, phase shift, phase shift in the resonance peaks, signal delay or just amplitude.

### BRIEF DESCRIPTION OF FIGURES

Fig. 1 shows a schematic view of a system for the inspection of a person.
Fig. 2 shows three response signals corresponding respectively, to the absence of person, person without attached object and person with attached object.

### PREFERRED EMBODIMENT OF THE INVENTION

Next, it is described in more detail the present invention referred to the attached figures.

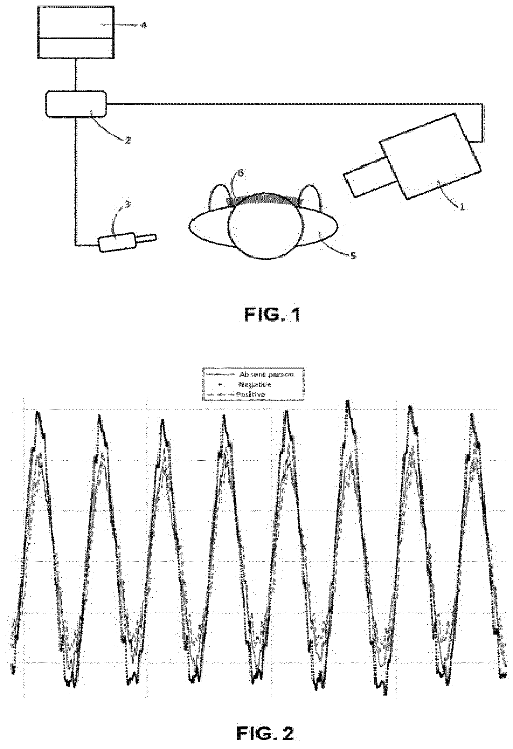

Fig. 1 shows an example of configuration of a system according to the present invention where the parts that conform it are shown. The system of this example comprises an emitter (1), in this case a PreSonus Temblor T10, and a detector (3), in this case, a Beyerdynamic MM1. The emitter (1) is pointed towards the person (5) and placed at approximately 1m from the person. On the opposite side of the person according to the direction of the emitter (1) it is the detector (3). The detector (3) is also oriented towards the person (5) and placed at 1 m from the person. The emitter (1) and the detector (3) are both connected to a means for processing (4), in this case a PC with a sound interface (2) model Focusrite Scarlett 2i2.

Now, it is briefly described the use procedure of the described system. First, a first measurement is done in the absence of a person (5) that will be used as reference (absent). Then, a second measurement is done with a person not carrying any object (6) attached (negative). Lastly, a third measurement is done with a person (5) that in this case carries an object (6) attached to the body (positive).

Each measurement includes the emission from the emitter (1) of low frequency acoustic waves in non-stationary and near field regime according to a sweep of frequencies that varies between 2 to 200Hz. At the beginning, a fixed frequency tone is maintained for a few cycles to allow an appropriate synchronization. Then, the detector (3) receives the acoustic waves reemitted by the person (5), with or without attached object (6), and from the room wherein it is . These received acoustic waves are transmitted to the means of processing (4) to be analysed.

Fig. 2 shows the obtained results. It can be seen how in the case of a negative, the received signal presents, in a particular interval, a higher amplitude than of a positive or an absence, as well as a different profile. This enables the distinction of some signals from others manually, by a well-trained technician or automatically by an artificial intelligence, also well-trained. Thus, the system can be trained for automatic detection by using artificial intelligence algorithms that could be for instance the ones included in the package Classification Learner for MATLAB.

**The research works leading to develop this invention was funded by H2020 program of the European Union under contract number 700399.**

## Claims

1. System for the detection of objects concealed beneath the clothing of a person **characterized by** comprising:
- At least an emitter (1) of acoustic waves towards the person (5), where the waves are acoustic waves of low frequency in non-stationary regime and near field; and
- At least one detector (3) of acoustic waves towards the person (5) to receive some acoustic waves reemitted by the person (5) in response to the interaction with the low frequency acoustic waves in non-stationary regime and near field;
where an analysis of the reemitted acoustic waves detected by at least one detector (3) allows to determine if the person (5) carries any object hidden under clothes.

2. System according to claim 1, where the low frequency acoustic waves in non-stationary regime have frequencies comprised between 2 and 200 Hz.

3. System according to any of claims 1-2, where at least one emitter (1) of acoustic waves is placed at a distance between 50 mm and 700mm away from the person (5).

4. System according to any of claims 1-3, where at least a detector (3) of reemitted, acoustic waves is placed at a distance between 0.1 m and 2 m from the person (5).

5. System according to any of the claims 1-4, also comprising a mean for processing (4) connected to the detector (3) to receive and analyse the reemitted waves detected by the detector (3) and determine if the person carries any object beneath the clothes.

6. Method for the detection of objects concealed beneath the clothing of a person, **characterized by** the following steps:
- To emit, by at least one emitter (1) facing to the person, acoustic waves of low frequency in non-stationary regime and near field;
- To Receive, by at least one detector (3) facing to the person, acoustic waves reemitted by the person (5) in response to low frequency acoustic waves in non-stationary regime and near field; and
- To Analyse, by a mean for processing (4), the acoustic waves reemitted to determine if the person (5) carries any item beneath the clothes.

7. Method according to claim 6, where the step of emitting low frequency acoustic waves in non-stationary regime and near field comprises performing a sweep of frequency between 2 and 200 Hz.

8. Method according to claim 7 where the sweep takes 460 cycles of frequencies between 30 and 110 Hz in approximately 6 seconds, such that each cycle has a frequency 0.21 Hz higher than the previous.

9. Method according to any of the claims 7-8, that additionally, implies emitting a first tone of fixed frequency for synchronization.

10. Method according to claim 9, where the fixed frequency tone lasts, at least, two cycles of that frequency.

11. Method according to any of the claims 6-10, where the step of analysing the reemitted acoustic waves to determine if the person (5) carries any kind of object concealed under clothes, comprises to compare the reemitted acoustic waves with a reference signal corresponding to the acoustic waves reemitted by a person (5) without any hidden object and/or a reference signal in absence of person (5).

12. Method according to claim 11, where the comparison is done by using one or several of the following parameters: Fourier Transform, phase shift, phase shift in the resonance peaks, signal delay or just amplitude.

13. Method according to any of claims 6-12, where the mean for processing (4) is connected to the receptor (2).
